# FASCICULE DE BREVET EUROPEEN

(11) **EP 0 369 831 B1**
(45) Date de publication et mention de la délivrance du brevet: **01.02.1995**
(21) Numéro de dépôt: 89401263.2
(22) Date de dépôt: 03.05.1989
(51) Int. Cl.: B01J 49/00, C13D 3/14

(54) **Procédé de traitement chimique des effluents de régénération de résines échangeuses d'ions de décoloration de solutions de sucre pour leur réutilisation comme régénérant**
Verfahren zur chemischen Behandlung von Abwässern aus der Regeneration von Ionenaustauscherharzen von Zucker-Entfärbungslösungen und deren Verwendung als Regenerierungsmittel
Process for the chemical treatment of regeneration effluents of ion exchange resins from sugar decoloration solutions, and their regenerative use

(30) Priorité: 19.10.1988 PT 88791
(43) Date de publication de la demande: 23.05.1990
(73) Titulaire: RAR - REFINARIAS DE ACUCAR REUNIDAS, S.A., 4100 Porto (PT)
(72) Inventeur: San Miguel Bento, Luis Rocha, Rès-do-châo Matoshinhos (PT)
(74) Mandataire: Kedinger, Jean-Paul

(56) Documents cités:
- CH-A- 302 892
- DE-B- 1 013 229
- DE-B- 1 098 460
- FR-A- 1 173 393
- US-A- 2 678 288
- US-A- 3 791 866
- US-A- 3 961 981

## Description

La présente invention concerne un procédé de régénération de résines échangeuses d'ions de décoloration de solutions de sucre, notamment de raffineries ou d'usines de sucre de canne ou de betterave, chargées de colorants, avec production de résines échangeuses d'ions régénérées et d'effluents liquides contenant lesdits colorants, et de traitement chimique desdits effluents pour en éliminer une partie desdits colorants.

Dans la technique antérieure, on utilise pour la régénération, une solution à 100 g/l de chlorure de sodium alcalinisée avec de la soude caustique, en produisant une quantité d'effluents équivalent à 2 à 3 mètres cubes par mètre cube de résine traitée, avec une quantité de chlorure de sodium d'environ 80 à 100 g/l, ce qui les rend difficile à traiter.

Par ailleurs, US-A-3 791 866 décrit l'utilisation d'une solution aqueuse de chlorure de sodium à environ 10 % comme régénérant des résines de décoloration des sirops de sucre de canne, avec recirculation de cette solution après son traitement par un agent oxydant.

Par US-A-2 678 288, on connaît également un procédé de régénération de matières échangeuses d'ions utilisées pour la purification de jus de betteraves sucrières, qui met en oeuvre de l'ammoniaque à titre de régénérant ; ce procédé prévoit en outre la récupération de NH₃ par évaporation de l'effluent de régénération auquel est éventuellement ajoutée de la chaux.

La présente invention vise un procédé conforme aux revendications 1 à 7 qui, non seulement permet la récupération de la majeure partie du chlorure de sodium des solutions issues de la régénération, mais produit une quantité moindre de boues de précipitation et une solution de faible teneur en chlorure de sodium comme résidus.

La résine échangeuse d'ions sur laquelle sont pratiqués la régénération et le traitement chimique objet de la présente invention devra être contenue dans une colonne ou des colonnes appropriées à la décoloration de solutions de sucre, dûment décompactée et lavée totalement sous forme de chlorure, et, avec le moins d'eau possible.

Le passage du régénérant à travers la ou les colonnes contenant la résine peut être fait de haut en bas ou de bas en haut selon ce qui est prévu par le type de colonnes utilisées.

Le régénérant doit traverser la ou les colonnes de résines avec un débit de 1 à 2 mètres cubes par mètre cube de résine à traiter et une température de 60 à 70° C.

Dans le cas où l'on réalise la décoloration des solutions de sucre dans deux colonnes ou plus en série, le volume de résine traitée ou à traiter doit être compris comme étant le volume de la résine contenue dans l'une des colonnes.

Dans le procédé selon l'invention, la régénération est effectuée en deux étapes, l'une comprenant une pré-régénération à basse concentration de sel, pour provoquer la séparation des colorants qui se séparent d'abord de la résine et qui ne précipitent pas avec de la chaux et l'autre faisant appel à des concentrations plus élevées en sel, pour provoquer l'extraction des autres colorants qui sont précipitables par la chaux.

L'effluent de cette seconde étape est traité chimiquement et est récupéré comme régénérant pour les cycles qui suivent.

Ainsi, on effectue la pré-régénération avec une solution de chlorure de sodium, en une quantité équivalente à 0,5 à 1,0 mètre cube par mètre cube de résines à traiter, contenant 30 à 70 g/l de NaCl, alcalinisée avec de l'ammoniaque ou avec de la soude, jusqu'à un pH situé entre 10,0 et 13,0.

Ensuite, dans le premier cycle, on débute le processus de régénération proposé dans cette invention, en faisant circuler à travers la résine une solution de chlorure de sodium contenant 100 à 200 g/l de NaCl, en une quantité équivalente à 2,5 à 3,0 mètres cube par mètre cube de résine à traiter.

Pour évacuer la saumure, on fait circuler à travers la colonne ou les colonnes de l'eau avec des débits, quantités et conditions appropriés au type de colonne et résine utilisees pour le lavage du régénérant, ce qui prépare la ou les colonnes pour le cycle suivant de décoloration de solutions de sucre.

Après l'évacuation de l'eau contenue dans la ou les colonnes, les effluents de la régénération sont recueillis et différenciés pour le traitement chimique, afin d'être récupérés, ou déchargés du système de décoloration.

Après la sortie de l'eau contenue dans la ou les colonnes et au commencement de la sortie des premiers colorants, on sépare une quantité d'effluent équivalente à 1,0 à 1,5 mètres cube par mètre cube de résine traitée, qui sera ici désigné par effluent A.

Puis, on prélève une quantité d'effluent équivalente à 2,5 à 3,0 mètres cube par mètre cube de résine traitée, qui sera désigné par effluent B.

Après cette opération on recueille l'effluent issu de la ou des colonnes de résine en une quantité équivalente à 0,5 à 1,0 mètre cube par mètre cube de résine traitée, qui sera ici désigné par effluent C.

La résine devra alors être lavée et préparée pour un nouveau cycle de décoloration de solutions de sucre selon ce qui est indiqué pour le type de résine et d'installation employées.

L'effluent A est déchargé du système de régénération de résines pour le système de traitement d'effluents ou pour une autre destination.

L'effluent B est traité par précipitation chimique, comme décrit ci-après, pour être utilisé comme régénérant remplaçant la solution de chlorure de sodium dans la phase de régénération.

L'effluent C est stocké pour être utilisé dans la pré-régénération.

A l'effluent C on ajoute du sel, NaCl, pour maintenir une concentration entre 30 et 70 g/l en NaCl, ainsi que de l'ammoniaque, NH4OH, ou de la soude, NaOH, jusqu'à atteindre un pH situé entre 10,0 et 13,0.

L'effluent B est traité chimiquement de la façon suivante :
- réchauffer l'effluent B jusqu'à une température de 60 à 70°C ;
- ajouter, tout en agitant, 3 à 10 % (v/v) d'une solution à 100 à 120 g/l d'hydroxyde de calcium, Ca(OH)2, contenant de 0 à 100 g/l de chlorure de sodium, NaCl ;
- maintenir le réchauffage, en agitant lentement, pendant 5 à 10 minutes ;
- si la décoloration par la précipitation résultante est inférieure à 30 %, il est nécessaire de procéder à une deuxième précipitation, après séparation du premier précipité, avec 100 à 600 ppm de silicate de sodium, à une température de 70 à 80°C, en maintenant une agitation lente pendant 10 à 20 minutes ;
- éliminer l'excès de calcium de la solution précédente jusqu'à un maximum de 0,2 g/l en calcium en solution, en employant l'un des procédés suivants; addition d'ions phosphate, sous l'une des formes H3PO4, P205, Na3PO4, Na2HPO4, NaH2PO4, ou des combinaisons de ces formes ; addition de carbonate de soude, Na2CO3 ; carbonatation par barbotage d'anhydride de carbone dans la solution, jusqu'à atteindre un pH entre 8,0 à 9,0 ;
- retirer le précipité formé par filtration, décantation ou centrifugation, avec ou sans l'aide d'auxiliaire de filtration ;
- si nécessaire, ajuster le pH de la solution filtrée à une valeur située entre 9,0 et 13,0 avec une solution diluée d'hydroxyde de sodium, d'ammoniaque, ou d'acide chlorydrique.

Dans les régénérations suivantes on procèdera de la même façon, en récupérant toujours l'effluent B qui, après avoir subi le traitement chimique décrit ci-dessus, servira comme régénérant dans la régénération suivante.

Après 10 à 20 cycles de décoloration, il faut effectuer une régénération acide, en portant le pH de la solution de chlorure de sodium employée pour la régénération, à une valeur située entre 2,0 et 4,0, avec de l'acide chlorhydrique.

Après cette régénération, et après lavage de la saumure acide, il faut faire une régénération normale comme celle qui a été décrite ci-dessus pour le premier cycle.

Les résines usuellement utilisées pour la décoloration des solutions de sucre sont des résines anioniques fortement basiques. Ces résines peuvent être protégées en utilisant en amont une résine anionique faiblement basique. En utilisant le procédé selon la présente invention, on peut utiliser l'effluent C comme régénérant de la résine anionique faible et on peut se dispenser de l'étape de pré-régénération. De cette manière, on peut utiliser deux types de résines, faiblement et fortement basique, en colonnes séparées, avec la même consommation de régénérant que pour la résine fortement basique.

## Revendications

1. Procédé de régénération de résines échangeuses d'ions de décoloration de solutions de sucre, chargées de colorants, avec production de résines échangeuses d'ions régénérées et d'effluents liquides contenant lesdits colorants, et de traitement chimique desdits effluents pour en éliminer une partie desdits colorants, ce procédé étant caractérisé en ce qu'il comprend :
(a) une étape de pré-régénération consistant à faire circuler à travers lesdites résines une solution aqueuse contenant 30 à 70 g/l de chlorure de sodium, en obtenant ainsi un premier effluent contenant une partie des colorants,
(b) une étape de régénération proprement dite consistant à faire circuler à travers les résines résultant de l'étape (a) une solution aqueuse contenant 100 à 200 g/l de chlorure de sodium, en obtenant ainsi un second effluent contenant des colorants, et
(c) une étape de précipitation chimique des colorants dudit second effluent, en obtenant ainsi un troisième effluent.

2. Procédé selon la revendication 1, caractérisé en ce qu'il comprend en outre une étape de recirculation dudit troisième effluent dans l'étape de régénération (b).

3. Procédé selon la revendication 1 ou 2, caractérisé en ce que la solution aqueuse de chlorure de sodium mise en oeuvre dans l'étape (a), est une solution alcalinisée avec NH₄OH ou NaOH, jusqu'à un pH situé entre 10 et 13, cette solution étant utilisée à raison de 0,5 à 1 m³ par m³ de résine à traiter.

4. Procédé selon l'une des revendications 1, 2 ou 3, caractérisé en ce que les solutions de chlorure de sodium sont utilisées à 60-70° C.

5. Procédé selon l'une quelconque des revendications précédentes, caractérisé en ce que la précipitation chimique de l'étape (c) est effectuée avec 3 à 10 % (v/v) d'une solution aqueuse contenant 100 à 120 g/l d'hydroxyde de calcium et 0 à 100 g/l de chlorure de sodium, cette précipitation chimique étant suivie de la précipitation de l'excès éventuel d'ions calcium, séparation du précipité formé et, si nécessaire ajustement du pH à 9-13.

6. Procédé selon la revendication 5, caractérisé en ce que la précipitation de l'excès éventuel d'ions calcium est effectuée, jusqu'à une concentration de calcium en solution maximale de 0,2 g/l, par une méthode choisie parmi les suivantes : addition d'ions phosphate sous l'une des formes H₃PO₄, P₂O₅, Na₃PO₄, Na₂HPO₄, NaH₂PO₄, ou une combinaison de ces formes ; addition de carbonate de sodium ; carbonatation par réaction avec l'anhydride carbonique jusqu'à un pH de 8-9.

7. Procédé selon l'une quelconque des revendications 2 à 6 dans lequel lesdites résines de décoloration sont fortement basiques, caractérisé en ce que l'on utilise la solution diluée de chlorure de sodium, alcalinisée, résultant de l'expulsion, par l'eau, dudit troisième effluent traité chimiquement et recirculé, contenu dans ledites résines de décoloration, pour la régénération de résines anioniques faiblement basiques placées en amont desdites résines de décoloration, fortement basiques.

## Claims

1. A process for the regeneration of ion exchange resins for sugar solution decoloration, charged with coloring agents, with the production of regenerated ion exchange resins and liquid effluents containing said coloring agents, and for the chemical treatment of said effluents for removing a part of said coloring agents therefrom, said process being characterized in that it comprises :
(a) a step of pre-regeneration comprising the circulation of an aqueous solution containing 30 to 70 g/l of sodium chloride through said resins, thus obtaining a first effluent containing a part of the coloring agents,
(b) a step of regeneration proper comprising the circulation of an aqueous solution containing 100 to 200 g/l of sodium chloride through the resins resulting from step (a), thus obtaining a second effluent containing coloring agents, and
(c) a step of chemical precipitation of the coloring agents of said second effluent, thus obtaining a third effluent.

2. The process according to claim 1, characterized in that it further comprises a step of recirculation of said third effluent in the step of regeneration (b).

3. The process according to claim 1 or 2, characterized in that the aqueous solution of sodium chloride used in step (a) is a solution alkalized with NH₄OH or NaOH, to a pH between 10 and 13, said solution being used at the rate of 0.5 to 1 m³ per m³ of resin to be treated.

4. The process according to one of claims 1, 2 or 3, characterized in that the sodium chloride solutions are used at 60-70°C.

5. The process according to any of the preceding claims, characterized in that the chemical precipitation of step (c) is performed with 3 to 10 % (v/v) of an aqueous solution containing 100 to 120 g/l of calcium hydroxide and 0 to 100 g/l of sodium chloride, said chemical precipitation being followed by the precipitation of the possible excess of calcium ions, separation of the formed precipitate and, if necessary, pH adjustment to 9-13.

6. The process according to claim 5, characterized in that the precipitation of the possible excess of calcium ions is performed to a maximum calcium concentration in solution of 0.2 g/l by a method selected among the following methods: addition of phosphate ions in one of the H₃PO₄, P₂O₅, Na₃PO₄, Na₂HPO₄, NaH₂PO₄ forms, or a combination thereof; addition of sodium carbonate; carbonatation by reaction with the carbon anhydride to a pH of 8-9.

7. The Process according to any of claims 2 to 6, wherein said decoloration resins are strong-base resins, characterized by the use of the alkalized sodium chloride diluted solution, resulting from the expulsion, by water, of said third effluent chemically treated and recirculated, contained in said decoloration resins, for the regeneration of weak-base anionic resins placed upstream of said strong-base decoloration resins.

## Patentansprüche

1. Verfahren zur Regenerierung von Entfärbungs-Ionenaustauschharzen von Zuckerlösungen mit Farbstoffen, mit Erzeugung von regenerierten Ionenaustauschharzen und von die Farbstoffe enthaltenden flüssigen Ausflüssen, und zur chemischen Behandlung dieser Ausflüsse zum Entfernen eines Teils der Farbstoffe aus letzteren, dadurch gekennzeichnet, daß es umfaßt :
(a) eine Stufe der Vorregenerierung, die darin besteht, eine 30 bis 37 g/l Natriumchlorid enthaltende wässerige Lösung durch die Harze durchlaufen zu lassen, woraus sich ein erster, ein Teil des Farbstoffe enthaltender Ausfluß ergibt,
(b) eine Stufe der eigentlichen Regenerierung, die darin besteht, eine 100 bis 200 g/l Natriumchlorid enthaltende wässerige Lösung durch die sich aus Stufe (a) ergebenden Harzen durchlaufen zu lassen, woraus sich ein zweiter, Farbstoffe enthaltender Ausfluß ergibt, und
(c) eine Stufe des chemischen Niederschlags der Farbstoffe des zweiten Ausflusses, woraus sich ein dritter Ausfluß ergibt.

2. Verfahren nach Patentanspruch 1, dadurch gekennzeichnet, daß es ferner eine Stufe des Wiederumlaufes des dritten Ausflusses bei der Stufe der Regenerierung (b) umfaßt.

3. Verfahren nach Patentanspruch 1 oder 2, dadurch gekennzeichnet, daß die in Stufe (a) eingesetzte wässerige Natriumchlorid-Lösung eine mit NH₄OH oder NaOH alkalisierte Lösung bis zu einem pH-Wert zwischen 10 und 13 ist, wobei diese Lösung im Verhältnis von 0,5 bis 1 m³ pro m³ zu behandelnden Harzes verwendet wird.

4. Verfahren nach Patentanspruch 1, 2 oder 3, dadurch gekennzeichnet, daß die Natriumchlorid-Lösungen bei 60-70°C verwendet werden.

5. Verfahren nach einem der vorhergehenden Patentansprüche, dadurch gekennzeichnet, daß der chemische Niederschlag der Stufe (c) mit 3 bis 10 Vol.% einer 100 bis 120 g/l Kalziumhydroxid und 0 bis 100 g/l Natriumchlorid enthaltenden wässerigen Lösung erfolgt, wobei diesem chemischen Niederschlag der Niederschlag des etwaigen Kalziumionen-Überschusses, die Absonderung des gebildeten Niederschlags und bei Bedarf die Einstellung des pH-Wertes auf 9-13 folgen.

6. Verfahren nach Patentanspruch 5, dadurch gekennzeichnet, daß der Niederschlag des etwaigen Kalziumionen-Überschusses bis 0,2 g/l maximaler Lösungskalziumkonzentration mittels eines unter folgenden Prozessen ausgewählten Prozesses erfolgt : Zugabe von Phosphat-Ionen als H₃PO₄, P₂O₅, Na₃PO₄, Na₂HPO₄ oder NaH₂PO₄, oder als Verbindung dieser Formen ; Zugabe von Natriumkarbonat ; Karbonatation durch Reaktion mit Kohlensäureanhydrid bis 8-9 pH-Wert.

7. Verfahren nach einem der Patentansprüche 2 bis 6, bei dem die Entfärbungsharze stark basisch sind, dadurch gekennzeichnet, daß zur Regenerierung von oberhalb der erwähnten stark basischen Entfärbungsharzen befindlichen schwach basischen Anionharzen die alkalisierte, gedünnte Natriumchloridlösung verwendet wird, die sich aus der Entfernung über Wasser des dritten, chemisch behandelten und wieder umgelaufenen Ausflusses ergibt, welches in den Entfärbungsharzen enthalten ist.
